Europäisches Patentamt

European Patent Office

Office européen des brevets

(19)

(11) EP 0 275 790 B1

(12) **FASCICULE DE BREVET EUROPEEN**

(45) Date de publication et mention
de la délivrance du brevet:
**18.11.1998 Bulletin 1998/47**

(51) Int Cl.⁶: **H04B 3/23**

(21) Numéro de dépôt: **87402983.8**

(22) Date de dépôt: **24.12.1987**

(54) **Terminal de transmission de données sur une voie analogique bidirectionnelle avec annulation d'écho couplée au rythme réception**

Datenendgerät zur Übertragung über einer analoge Zweiwegleitung mit an den Empfangstakt gekoppelter Echokompensation

Terminal for data transmission over an analogous bidirectional line with echo cancellation coupled to the reception clock

(84) Etats contractants désignés:
**AT BE CH DE ES GB GR IT LI LU NL SE**

(30) Priorité: **30.12.1986 FR 8618334**

(43) Date de publication de la demande:
**27.07.1988 Bulletin 1988/30**

(73) Titulaire: **SAT Société Anonyme de Télécommunications
75631 Paris Cedex 13 (FR)**

(72) Inventeurs:
• **Marcos, Sylvie Luisa
F-92160 Antony (FR)**
• **Macchi, Odile Marie Madeleine
F-91400 Orsay (FR)**
• **Pinteaux, Jean-Bernard Louis Pol
F-77330 Lesigny (FR)**

(74) Mandataire: **Bloch, Gérard et al
2, square de l'Avenue du Bois
75116 Paris (FR)**

(56) Documents cités:
EP-A- 0 074 089          EP-A- 0 107 246
US-A- 4 074 086

• EXPOSE A L'OCCASION DU CONGRES-N.T.G. (NTG-FACHTAGUNG), 23-25 mars 1983, pages 115-127, Garmisch-Partenkirchen, DE; V. HESPELT et al.: "Ein verbesserter Echolöscher für die Duplex-Datenübertragung über 2-Draht-Verbindungen"
• COMMUNICATION ET TRANSMISSION, vol. 6, no. 2, juin 1984, pages 93-101, Issy-les-Moulineaux, FR; B. PEUCH: "Sematrans 4848 un modem fonctionnant en duplex sur deux fils A 4800 bit/s"
• 1976 NATIONAL TELECOMMUNICATIONS CONFERENCE, dallas, 29 novembre - 1 décembre 1976, pages 8.3.1.-8.3.7, IEEE, New York, US; D.D. FALCONER et al.: "Echo cancellation techniques for full-duplex data transmission on two wire lines"
• "Echo Cancellation Technique For Full-Duplex Data Transmission On Two Wire Lines". D.D. Falconer et al.; National Telecommunications Conference, Vol. 1, Nov. 29,30 and 1 Dec. 1976, Dallas, Texas, USA, pages 8.3-1 to 8.3-7
• "Echo Cancellation in the Telephone Network". S. B. Weinstein. IEEE Communications Society Magazine, Jan. 1977, pages 8 to 15

## Description

La présente invention a pour objet un terminal de transmission de données sur une voie analogique bidirectionnelle, simultanément dans les deux sens. Selon le préambule de la revendication 1.

Avec des terminaux de ce type, une voie bidirectionnelle, par exemple une simple liaison à deux fils, peut être utilisée pour la transmission ("full-duplex"), simultanée dans les deux sens de données entre deux terminaux. En effet, grâce à l'annuleur d'écho, le principal inconvénient de ce type de liaison, à savoir la présence, dans la voie de réception, d'un signal d'écho résultant des réflexions parasites du signal émis localement, et susceptible de perturber la réception, se trouve éliminé.

On connaît déjà des terminaux du type défini ci-dessus, en particulier par l'article de S.B. Weinstein "A Passband Data-Driven Echo Canceller for Full-Duplex Transmission on Two-Wire Circuits", IEEE Trans. on Com. Vol. Com-25, No.7, July 1977 pages 654-665.

On connaît également, du document EP-A-107246 un terminal dans lequel le signal émis est synchronisé sur le signal reçu.

Dans un terminal du type précédent, les données à émettre sont des données numériques, codées à l'aide de symboles ayant une certaine rapidité de modulation, exprimée en bauds, encore appelée fréquence baud à l'émission. L'annuleur d'écho comprend au moins un filtre numérique qui calcule directement, à partir des symboles à émettre, le signal d'écho estimé. L'ajustement des coefficients du filtre numérique est fait, par exemple, au cours d'une procédure d'initialisation, au cours de laquelle, le terminal lointain n'émettant pas, le terminal proche émet un signal. Il est alors certain que le signal reçu est égal au signal d'écho et les coefficients du filtre de l'annuleur sont alors ajustés pour annuler la différence entre le signal d'écho vrai et le signal d'écho estimé. Lorsque les causes de l'écho ne sont pas susceptibles de varier au cours du temps, le terminal peut alors fonctionner normalement. Lorsque les causes de l'écho sont susceptibles de changer au cours du temps, on fait fonctionner le terminal en adaptant en permanence les coefficients du filtre de l'annuleur pour que la fonction de corrélation entre, d'une part la différence entre le signal reçu et le signal d'écho estimé, et d'autre part le signal à l'entrée de l'annuleur, soit nulle. En effet, la différence précédente représente en fait la somme du signal en provenance du terminal lointain et d'un résidu d'écho, et la fonction de corrélation entre le signal en provenance du terminal lointain et le signal à l'entrée de l'annuleur est nulle. On arrive ainsi à annuler le résidu d'écho, de façon adaptative, même en présence de signal en provenance du terminal lointain.

Du fait que l'annuleur d'écho travaille à partir des symboles à émettre, il est synchronisé sur la fréquence baud à l'émission. Comme celle-ci n'est pas synchrone de la fréquence baud à la réception, c'est-à-dire de la rapidité de modulation des symboles émis par le terminal lointain, le signal reçu est échantillonné à une fréquence d'échantillonnage choisie égale à un multiple de la fréquence baud à l'émission. Ainsi, la fréquence d'échantillonnage du signal reçu et le rythme de travail de l'annuleur d'écho sont synchronisés, ce qui permet le fonctionnement de celui-ci, sans que l'information contenue dans le signal reçu ne soit perdue, car, naturellement, la fréquence multiple de la fréquence baud à l'émission qui sert à l'échantillonnage du signal reçu est choisie assez grande pour que le théorème de Shannon se trouve toujours respecté, compte tenu des caractéristiques spectrales attendues du signal reçu, et en particulier du signal d'écho.

Cependant, les moyens d'estimation des données lointaines étant des moyens numériques travaillant sur des échantillons, il est nécessaire que ces échantillons soient obtenus par un échantillonnage à une fréquence multiple de la fréquence baud à la réception, ou à une fréquence égale à cette fréquence baud, ce qui oblige à faire passer les échantillons de la différence entre le signal reçu et le signal d'écho estimé dans un filtre d'interpolation analogique, afin de reconstituer un signal analogique pouvant être échantillonné à la fréquence multiple de la fréquence baud à la réception, ou à cette fréquence baud, avant le traitement de réception. Naturellement, pour réduire le nombre d'opérations à effectuer pour l'annulation d'écho, il est préférable de choisir la fréquence d'échantillonnage multiple de la fréquence baud à l'émission de façon à ce que celle-ci soit la plus basse fréquence possible. Toutefois, plus cette fréquence est basse, plus les contraintes sur la raideur des flancs du filtre d'interpolation sont grandes, et un compromis doit en général être trouvé.

Par ailleurs, dans une réalisation numérique d'un tel terminal, à l'aide par exemple de processeurs, le traitement dans l'annuleur d'écho et le traitement dans les moyens d'estimation des données lointaines, c'est-à-dire dans le récepteur, nécessitent chacun des puissances de calcul relativement importantes. Comme ces deux traitements se font à des rythmes non synchrones, il est nécessaire de gérer le partage du temps de traitement entre l'annuleur d'écho et le récepteur, ce qui complique le terminal.

Enfin, dans un terminal du type ci-dessus, si le signal se propageant sur la voie bidirectionnelle subit des distorsions importantes et éventuellement variables dans le temps, il est possible, comme cela est connu, de compenser ces distorsions à l'aide d'un filtre, dit "filtre égaliseur" agissant sur le signal reçu, éventuellement adaptatif pour suivre les variations, dans le temps, des caractéristiques de la voie de transmission bidirectionnelle. Comme cela est connu, un tel filtre est par exemple un filtre numérique, dont les coefficients sont ajustés pour compenser les distorsions de la voie de transmission. L'ajustement des coefficients est fait, par exemple, au cours d'une procédure d'initialisation, au cours de laquelle le terminal lointain émet une séquence de symboles prédéterminée et connue du terminal proche. Celui-ci est agencé pour comparer la séquence de symboles lointains estimés à la séquence prédéterminée et pour ajuster les coefficients du filtre égaliseur de façon à réaliser l'égalité entre ces deux séquences. Lorsque les caractéristiques de la voie de transmission ne sont pas susceptibles de changer au cours du temps, le terminal peut alors fonctionner normalement. Lorsque les caractéristiques de la voie de transmission sont susceptibles de changer au cours du temps, on fait fonctionner le terminal en adaptant en permanence les coefficients du filtre égaliseur, en utilisant comme critère le fait que, les symboles de codage ne pouvant prendre qu'un certain nombre d'états distincts, et connus, la différence entre la valeur du signal reçu après égalisation et annulation d'écho et la valeur de l'état connu le plus proche doit être nulle si le filtre égaliseur compense convenablement les distorsions de la voie de transmission.

Toutefois, dans un terminal du type ci-dessus, et dans les cas où l'annuleur d'écho, comme l'égaliseur, sont adaptatifs, du fait que leurs rythmes de fonctionnement sont différents, leurs adaptations sont commandées par des signaux différents. Il en découle que, dans le cas fréquent où l'égaliseur est disposé en aval du point où commande l'annuleur d'écho est bruité à cause du signal en provenance du terminal lointain, alors que l'entrée de l'égaliseur est bruitée par le résidu d'écho. Il en résulte des performances peu satisfaisantes de l'ensemble du terminal.

La présente invention pallie les inconvénients précédents en procurant un terminal ne comportant pas de filtre d'interpolation, ne nécessitant pas de gestion du partage du temps des unités de calcul, et permettant l'utilisation d'un annuleur d'écho dont l'adaptation est commandée par le signal qui commande l'adaptation du filtre égaliseur, ce qui lui confère de très bonnes performances.

A cet effet la présente invention a pour objet un terminal selon la revendication 1.

Dans le terminal de l'invention, du fait que l'annuleur d'écho fonctionne sur le rythme défini par le signal d'horloge synchronisé sur la fréquence baud à la réception, il est inutile de placer un filtre d'interpolation en aval du point où les échantillons du signal d'écho estimé sont soustraits des échantillons du signal reçu. Du fait que l'annuleur d'écho et le récepteur fonctionnent avec des rythmes synchrones, il est plus facile de gérer le parage du temps des unités de calcul. Comme les moyens pour engendrer le signal émis ne nécessitent pas une grande puissance de calcul, il est possible, dans une réalisation pratique, de concevoir un émetteur assez simple et de faible volume, l'annuleur d'écho étant inclus dans le récepteur, puisque ces deux systèmes fonctionnent sur des rythmes synchrones.

Dans cette invention, il est remarquable que les inventeurs, Mademoiselle MARCOS et Madame MACCHI, du Laboratoire des Signaux et Systèmes (L2S) et Monsieur PINTAUX, de la Société Anonyme de Télécommunications (SAT), aient eu l'idée, pour parvenir aux résultats précédents, de combiner la synchronisation de l'annuleur d'écho par le récepteur, avec l'utilisation, comme signal à l'entrée d'un annuleur d'écho numérique, d'un signal analogique. En effet, cette idée va à l'encontre de l'art antérieur, puisque celui-ci enseigne, au contraire, dans le cas d'un annuleur d'écho numérique, de remonter le plus possible dans la chaîne d'émission pour raccorder l'entrée de l'annuleur d'écho, en travaillant directement sur les symboles émis (voir par exemple l'article "Digital Echo Cancellation for Baseband Data Transmission" dans IEEE Transactions an acoustic, speech, and signal processing, Vol. ASSP-27 No.6 December 1979). L'invention, qui utilise un annuleur d'écho synthétisant un signal d'écho plus court, permet de raccourcir la longueur du filtre utilisé.

Du fait qu'aucune hypothèse n'est faite sur le signal d'émission, le terminal de l'invention peut travailler avec n'importe quel type de signal émis, en particulier quelle que soit sa fréquence baud et sa fréquence porteuse, et donc que le recouvrement spectral entre la voie émission et la voie réception soit total ou partiel, les fréquences bauds émission et réception étant, ou non, dans un rapport rationnel.

Dans la forme de réalisation préférée du dispositif de l'invention, lesdits moyens de commande de la fréquence d'échantillonnage sont agencés pour que celle-ci soit un multiple de ladite rapidité de modulation.

Avantageusement, les symboles de codage des données numériques lointaines pouvant prendre n états distincts de valeurs connues, les moyens de traitement comprennent un circuit à contrôle automatique de gain, suivi d'un convertisseur analogique-numérique délivrant des échantillons numériques, un circuit de comparaison des valeurs desdits échantillons numériques aux n valeurs connues correspondant aux n états distincts, et de décision de la valeur à affecter à chaque symbole lointain estimé, et un circuit pour restituer, à partir desdits échantillons numériques, ledit signal de rythme et un signal de commande du rythme du circuit de comparaison et de décision.

Selon une première caractéristique de l'invention, les premiers moyens de filtrage sont adaptatifs, pourvus d'une entrée, d'une sortie et d'une entrée de commande reliée à la sortie des premiers moyens de soustraction, et agencés pour annuler la fonction de corrélation entre les deux signaux appliqués respectivement à leur entrée et à leur entrée de commande.

Selon une deuxième caractéristique de l'invention,

-    il est prévu, en outre, des deuxièmes moyens de soustraction entre la sortie et l'entrée du circuit de comparaison et de décision, pour délivrer un signal d'erreur,

-    il est prévu, entre lesdits premiers moyens d'échantillonnage, et lesdits premiers moyens de soustraction, des deuxièmes moyens de filtrage, adaptatifs, pourvus d'une entrée, d'une sortie et d'une entrée de commande recevant le signal d'erreur, et agencés pour annuler la fonction de corrélation entre les deux signaux appliqués respectivement à leur entrée et à leur entrée de commande, et,

- les premiers moyens de filtrage sont adaptatifs, pourvus d'une entrée, d'une sortie et d'une entrée de commande recevant le signal d'erreur, et agencés pour annuler la fonction de corrélation entre les deux signaux appliqués respectivement à leur entrée et à leur entrée de commande.

Selon une troisième caractéristique de l'invention,

- il est prévu, en outre, des deuxièmes moyens de soustraction entre la sortie et l'entrée du circuit de comparaison et de décision, pour délivrer un signal d'erreur,
- il est prévu, entre lesdits premiers moyens de soustraction et le circuit de comparaison et de décision, des deuxièmes moyens de filtrage, adaptatifs, pourvus d'une entrée, d'une sortie et d'une entrée de commande recevant le signal d'erreur, et agencés pour annuler la fonction de corrélation entre les deux signaux appliqués respectivement à leur entrée et à leur entrée de commande, et,
- les premiers moyens de filtrage sont adaptatifs, pourvus d'une entrée, d'une sortie et d'une entrée de commande recevant le signal d'erreur, et agencés pour annuler la fonction de corrélation entre le signal d'erreur et le signal appliqué à leur entrée, après un filtrage de ce signal d'entrée en permanence identique au filtrage entre l'entrée et la sortie des deuxièmes moyens de filtrage.

Dans un tel terminal, le fait d'utiliser le même signal d'erreur pour commander l'adaptation du filtre de l'annuleur d'écho et l'adaptation du filtre égaliseur conduit à de meilleures performances en présence de bruit, car le signal de commande de l'annuleur d'écho est débarrassé du signal lointain. Ceci permet, par rapport à la même structure dans lequel les signaux commandant les deux adaptations seraient différents, d'utiliser un annuleur d'écho agencé pour suivre des variations temporelles plus rapides du signal d'écho, sans risque de mauvais fonctionnement.

D'autres caractéristiques et avantages de l'invention apparaîtront dans la description suivante de la forme de réalisation préférée et de quelques variantes du terminal de l'invention, faite en se référant aux dessins annexés, sur lesquels :

- la figure 1 représente un schéma par blocs du terminal de l'invention,

- la figure 2 représente le circuit d'émission du terminal de la figure 1,

- la figure 3 représente le circuit de filtrage adaptatif de l'annuleur d'écho du terminal de la figure 1,

- la figure 4 représente une première variante du terminal de la figure 1, correspondant au cas où un circuit d'égalisation est inséré en amont de l'annuleur d'écho,

- la figure 5 représente, de façon plus détaillée, le circuit de réception du terminal de la figure 4,

- la figure 6 représente le circuit d'égalisation du terminal de la figure 4,

- la figure 7 représente le circuit de filtrage adaptatif de l'annuleur d'écho du terminal de la figure 4,

- la figure 8 représente une deuxième variante du terminal de la figure 1, correspondant au cas où un circuit d'égalisation est inséré en aval de l'annuleur d'écho,

- la figure 9 représente le circuit d'égalisation du terminal de la figure 8,

- la figure 10 représente le circuit de filtrage adaptatif de l'annuleur d'écho du terminal de la figure 8,

- la figure 11 représente une variante du terminal de la figure 8, correspondant au cas où un annuleur d'écho supplémentaire, pour écho lointain, est inséré en aval du circuit d'égalisation,

- la figure 12 représente une variante du circuit de réception du terminal des figures 4, 8 et 11, et,

- la figure 13 représente deux variantes du circuit d'émission du terminal des figures 1, 4, 8 et 11.

Sur l'ensemble des figures, les liaisons qui transmettent des signaux analogiques sont figurées par un trait unique, du type utilisé de manière connue pour schématiser par exemple une liaison 2 fils, alors que les liaisons qui transmettent des signaux numériques sont figurées par un trait double, du type utilisé de manière connue pour schématiser par exemple un bus de liaison numérique.

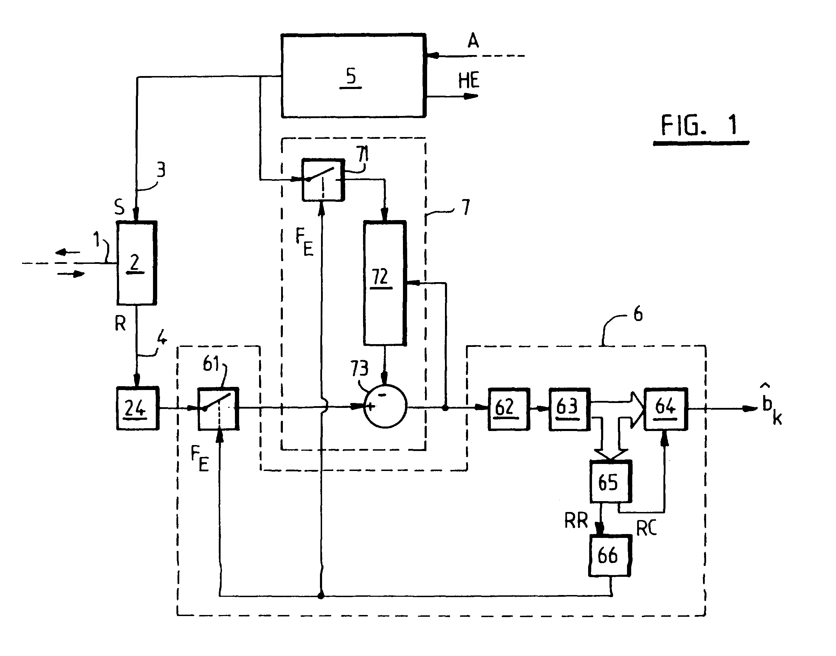

En se référant à la figure 1, un terminal de transmission de données numériques est raccordé à une voie 1 de transmission analogique bidirectionnelle, ou ligne, ici à deux fils, grâce à un coupleur hybride, ou jonction hybride, 2.

De façon connue, le coupleur hybride 2 est pourvu de deux accès, l'un d'entrée, l'autre de sortie, raccordés respectivement à une voie d'émission 3 et à une voie de réception 4. Ces deux voies sont également des voies analogiques à deux fils, mais elles sont unidirectionnelles en ce sens que les signaux sur la voie d'émission 3 entrent dans le coupleur hybride 2 et en sortent pas la voie 1, alors que les signaux sur la voie de réception 4 sortent du coupleur hybride 2 où ils sont entrés par la voie 1.

Un circuit d'émission 5 est pourvu d'une entrée recevant un signal A, d'une sortie principale délivrant un signal S sur la voie d'émission 3 et d'une sortie auxiliaire délivrant un signal HE.

La voie de réception 4 est reliée à l'entrée d'un filtre 24, dont la sortie est reliée à l'entrée d'un échantillonneur 61. La sortie de l'échantillonneur 61 est reliée à l'entrée plus d'un soustracteur analogique 73, dont la sortie est reliée, par l'intermédiaire d'un circuit 62 à contrôle automatique de gain, à un convertisseur analogique-numérique 63. La sortie du convertisseur analogique-numérique 63 est reliée aux entrées de deux circuits numériques 64 et 65. Le circuit numérique 65 délivre un signal analogique RR de rythme de réception à un circuit 66, et un signal analogique RC de commande de rythme au circuit numérique 64. Le circuit 66 commande la fréquence d'échantillonnage $F_E$ de l'échantillonneur 61.

Le circuit 64, de comparaison et de décision, délivre un signal $\hat{b}_k$.

La sortie du circuit d'émission 5, délivrant le signal S, est connectée à l'entrée d'un échantillonneur 71 dont la sortie est connectée à l'entrée d'un circuit de filtrage adaptatif 72. La sortie de ce circuit 72 est reliée à l'entrée moins du soustracteur 73. L'échantillonneur 71 est commandé, par le circuit 66 de commande de fréquence d'échantillonnage, à la même fréquence d'échantillonnage $F_E$ que l'échantillonneur 61. Le circuit de filtrage adaptatif 72 est pourvu d'une entrée de commande reliée à la sortie du soustracteur 73.

Avant d'aborder la description plus détaillée de chacun des circuits précédents, abordons le fonctionnement du terminal qui vient d'être décrit.

Le circuit d'émission 5 reçoit le signal A, à titre d'exemple un signal binaire de données à 9600 bits/s, à émettre vers un autre terminal non représenté et relié à la voie 1. Le circuit d'émission 5, comme cela sera mieux expliqué dans la suite, effectue un codage du signal binaire à l'aide d'un signal de symboles $a_k$ à 2400 bauds, puis filtre ce signal pour obtenir un signal analogique S, de caractéristiques propres à être émis sur la ligne 1.

Simultanément, l'autre terminal effectue le même type d'opérations, et à partir d'un signal analogique R reçu sur la voie de réception 4, le circuit 6 de la figure 1 estime les données lointaines émises par l'autre terminal, et plus particulièrement ici des symboles $b_k$ en délivrant le signal de symboles estimés $\hat{b}_k$. Le circuit 6 de la figure 1 regroupe l'échantillonneur 61, le circuit 62 à contrôle automatique de gain, le convertisseur analogique-numérique 63, le circuit 64 de comparaison et de décision, le circuit 65 de restitution du rythme de réception et le circuit 66 de commande de fréquence d'échantillonnage.

Toutefois, comme le coupleur hybride 2 présente des imperfections, ainsi que la ligne 1, une partie importante du signal reçu R provient des réflexions du signal émis S sur ces imperfections et le signal d'écho résultant, dont le niveau peut être très supérieur à celui du signal en provenance du terminal lointain, doit être éliminé avant le traitement à la réception. C'est le rôle de l'annuleur d'écho 7, regroupant l'échantillonneur 71 et le circuit de filtrage adaptatif 72. Le circuit de filtrage adaptatif 72 est, comme cela est connu, agencé pour annuler la fonction de corrélation entre le signal appliqué à son entrée, ici des échantillons du signal émis S, et le signal en sortie du soustracteur 73. De cette manière, l'annuleur d'écho 7 synthétise en permanence des échantillons, synchrones des échantillons du signal reçu R, tels que les échantillons en sortie du soustracteur 73 ne soient pas corrélés avec les échantillons du signal émis S, donc ne soient représentatifs que du signal en provenance du terminal lointain.

Ici, le circuit 65 de restitution du rythme de réception est agencé pour délivrer au circuit 66 de commande de fréquence d'échantillonnage le signal RR de rythme de réception dont la fréquence est égale à la rapidité de modulation, ou fréquence baud, $F_B$ des symboles $b_k$ en provenance du terminal lointain, c'est-à-dire la fréquence baud à la réception. Le circuit 66 est un circuit générateur de rythme qui commande alors la fréquence d'échantillonnage $F_E$ des échantillonneurs 71 et 61 pour que celle-ci soit un multiple de la fréquence baud à la réception $F_B$.

Dans le cas fréquent, où, sans être synchronisées, les fréquences baud à l'émission et à la réception sont du même ordre de grandeur, on peut choisir la fréquence d'échantillonnage $F_E$ égale à trois fois la fréquence baud à la réception $F_B$, soit dans le cas d'une fréquence baud à la réception de 2400 bauds :

$$F_E = 7200 \ H_z.$$

Ainsi, du fait que l'annuleur d'écho 7 travaille sur un rythme imposé par le circuit 65 de restitution du rythme de réception, il n'est pas nécessaire, comme dans les terminaux de l'art antérieur, de placer un filtre d'interpolation à la sortie du soustracteur 73.

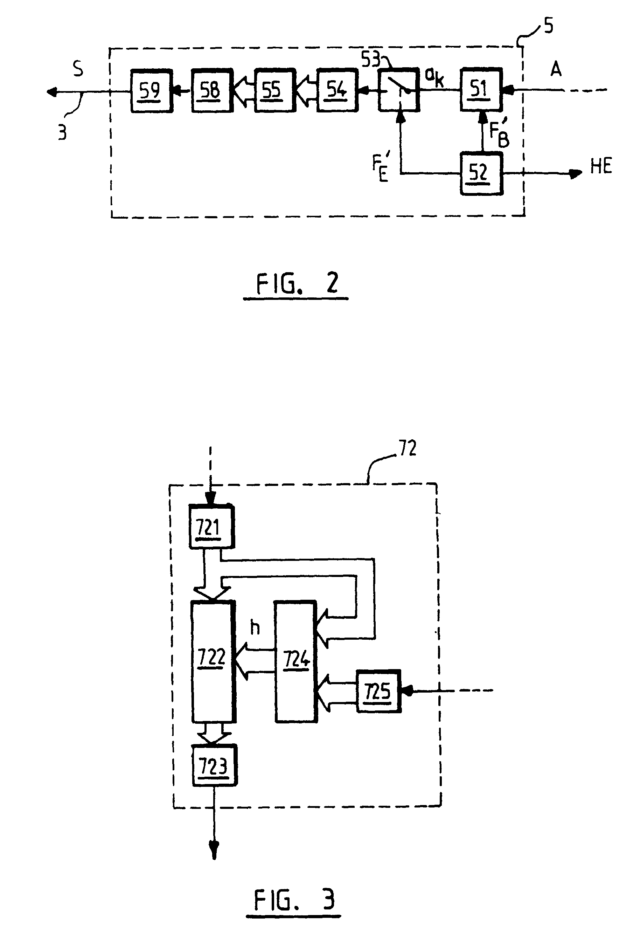

La figure 2 représente le circuit d'émission 5, qui comprend un codeur 51, du type connu délivrant, en réponse à un signal binaire de débit donné, une suite de symboles $a_k$, de rapidité de modulation, ou fréquence baud, inférieure au débit. Ici, le débit du signal binaire est de 9600 bits/s et la fréquence baud $F'_B$ vaut 2400 bauds, chaque symbole pouvant prendre ici seize états distincts de valeurs prédéterminées et connues. La fréquence baud $F'_B$ est fixée par une horloge d'émission 52, qui délivre ici un signal HE aux circuits de type connu et non représentés, disposés en amont du circuit d'émission 5, et un signal de commande de la fréquence d'échantillonnage $F'_E$ d'un échantillonneur 53, à une valeur telle que :

$$F'_E = 3 F'_B$$

Après passage dans un convertisseur analogique-numérique 54, et dans un filtre numérique 55, du type connu de mise en forme des signaux, le signal résultant est appliqué à un convertisseur numérique-analogique 58 suivi d'un filtre 59, de façon à obtenir le signal analogique S envoyé sur la voie d'émission 3.

Le filtre 24 est un filtre analogique de type connu destiné à limiter la bande de réception, donc le bruit, à ce qui est juste nécessaire pour la réception du signal en provenance du terminal lointain.

Le circuit numérique 65 est du type connu agencé pour restituer, à partir des échantillons numériques du signal en provenance du terminal lointain, le signal RR de rythme, dont, comme cela a déjà été signalé, la fréquence est identique à la fréquence baud $F_B$ des symboles en provenance du terminal lointain. Le circuit 65 est également agencé pour délivrer un signal RC de commande de rythme du circuit 64 de comparaison et de décision.

Le circuit 64 de comparaison et de décision est du type connu qui compare les valeurs des échantillons numériques à son entrée aux ici seize valeurs correspondant aux seize états possibles pour les symboles et décide d'affecter une valeur à chaque symbole lointain estimé $\hat{b}_k$.

En se référant à la figure 3, le circuit de filtrage adaptatif 72 comprend, en entrée, un convertisseur analogique numérique 721, dont la sortie est reliée à l'entrée d'un filtre numérique 722 et à une première entrée d'un circuit numérique 724 de commande des coefficients du filtre 722. La sortie du filtre numérique 722 est reliée à la sortie du circuit de filtrage 72 par l'intermédiaire d'un convertisseur numérique analogique 723. L'entrée de commande du circuit de filtrage 72 est reliée à une deuxième entrée du circuit 724 de commande, par l'intermédiaire d'un convertisseur analogique-numérique 725. Le circuit de commande 724 est agencé pour commander les coefficients du filtre numérique 722 de façon à annuler la fonction de corrélation entre le signal appliqué à l'entrée du filtre numérique 722 et le signal appliqué à l'entrée de commande du circuit de filtrage 72. Un procédé classique et bien connu consiste à utiliser l'algorithme du gradient stochastique, qui modifie les coefficients du filtre proportionnellement à cette fonction de corrélation, algorithme que l'on peut résumer par l'équation suivante, dans le cas présent où le signal à l'entrée du filtre est réel :

$$h_i^{k+1} = h_i^k + \alpha \, e \, (k\,T) \, x \, (k\,T\text{-}i\,T)$$

dans laquelle

-  $T_k$ est la période d'échantillonnage,
-  $h_i$ est le coefficient du filtre de rang i, à l'instant $t_k$ =

k T,
-  e (k T) est le signal appliqué à l'entrée de commande à l'instant $t_k$ = k T,
-  x (k T-i T) est le signal appliqué à l'entrée du filtre à l'instant $t_{(k\text{-}i)}$ = k T-i T, et
-  $\alpha$ est une constante.

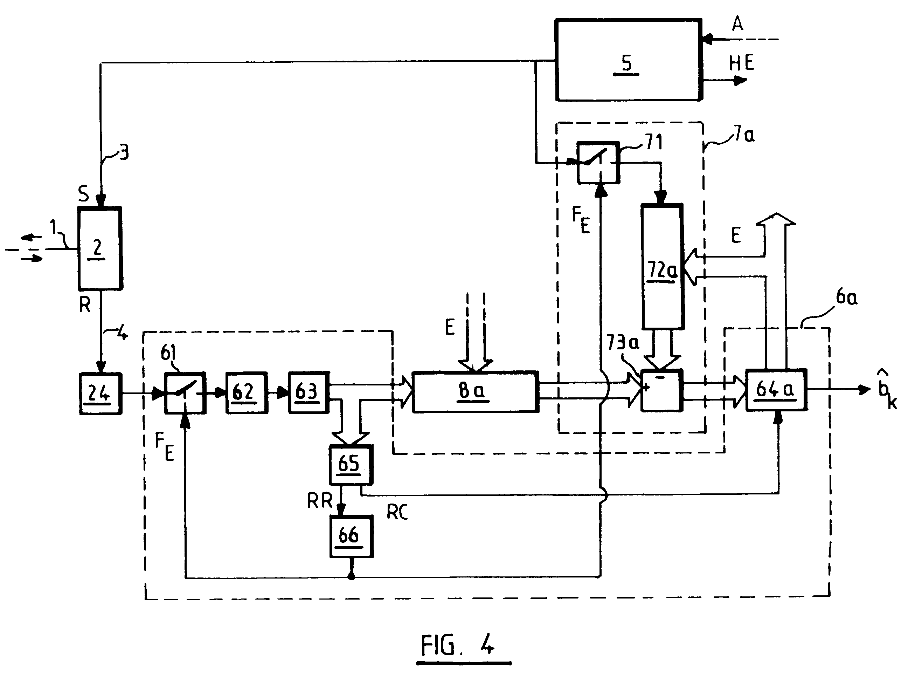

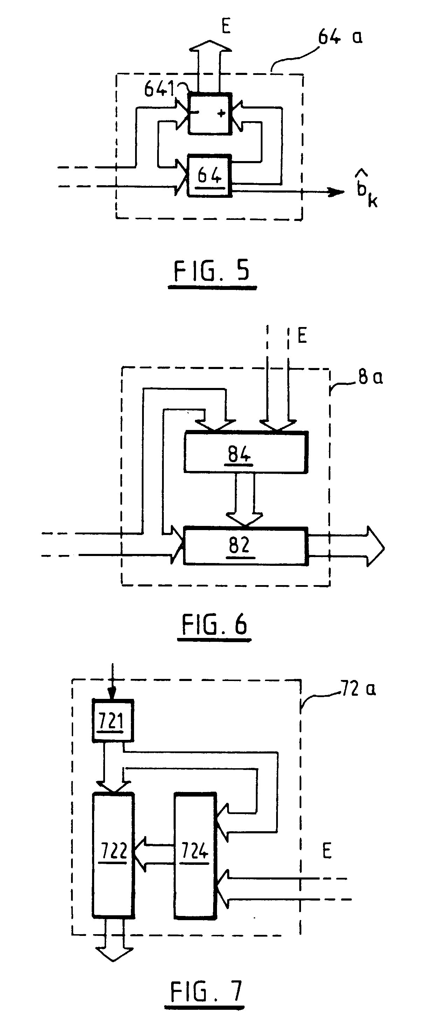

En référence maintenant à la figure 4, une variante du terminal de l'invention est décrite, dans laquelle un circuit d'égalisation 8a est inséré avant l'annuleur d'écho, qui porte ici la référence 7a. Comme le montre cette figure, le circuit 62 à contrôle automatique de gain est alors disposé immédiatement après l'échantillonneur 61, et il est suivi du convertisseur analogique-numérique 63. L'ensemble du traitement qui suit est effectué sur des échantillons numériques. La sortie du convertisseur analogique-numérique 63 est, comme précédemment, appliqué à l'entrée du circuit 64 de restitution du rythme de réception, qui délivre le signal RC au circuit 64 de comparaison et de décision, faisant partie du bloc 64a, comme le montre la figure 5. Le circuit 64 de restitution du rythme de réception délivre également le signal RR au circuit 66 de commande de fréquence d'échantillonnage, qui commande les échantillonneurs 61 et 71 à la fréquence $F_E$. La sortie du convertisseur analogique-numérique 63 est également appliquée à l'entrée du circuit d'égalisation 8a dont la sortie est reliée à l'entrée plus d'un circuit 73a de soustraction numérique, dont la sortie est reliée à l'entrée du circuit 64 de comparaison et de décision, comme le montrent les figures 4 et 5. L'entrée moins du circuit 73a de soustraction numérique est reliée à la sortie d'un circuit de filtrage adaptatif 72a dont l'entrée est reliée à la sortie de l'échantillonneur 71, disposé comme précédemment.

En référence à la figure 5, un circuit 641 de soustraction numérique est connecté entre la sortie et l'entrée du circuit 64 de comparaison et de décision et délivre un signal d'erreur E égal à la différence entre les valeurs connues affectées aux symboles estimés $\hat{b}_k$ et les valeurs reçues, avant décision, de ces symboles.

Le circuit d'égalisation 8a est un filtre adaptatif, prévu, comme cela est connu, pour compenser les distorsions variables subies par le signal en provenance du terminal lointain. Il est pourvu d'une entrée de commande recevant le signal d'erreur E. Comme le montre la figure 6, il comprend un filtre numérique 82 dont les coefficients sont en permanence commandés par un circuit de commande 84, qui reçoit le signal à l'entrée du filtre 82 et le signal d'erreur E. Le circuit de commande 84 est ici d'un type analogue à celui du circuit de commande 724, et agencé pour commander les coefficients du filtre numérique 82 de façon à annuler la fonction de corrélation entre le signal appliqué à l'entrée du filtre numérique 82 et le signal d'erreur E. Le circuit 84 met en oeuvre l'algorithme du gradient stochastique.

Le circuit de filtrage adaptatif 72a est représenté sur la figure 7. Il est identique au circuit de filtrage adaptatif 72 de la figure 3, à ceci près qu'il ne comporte ni le convertisseur analogique-numérique 725, ni le convertisseur numérique-analogique 723.

Le fonctionnement de la structure de la figure 4 est évident, si l'on remarque que, lorsque les coefficients du circuit d'égalisation 8a et de l'annuleur d'écho 7a sont convenablement ajustés, le signal d'erreur E est, en principe ,nul. Le signal d'erreur E commande donc l'adaptation des coefficients du filtre numérique 82 d'égalisation et du filtre numérique 722 d'annulation d'écho pour qu'il en soit ainsi.

La structure de la figure 4 présente cependant un inconvénient, lié au fait que l'annuleur d'écho 7a doit tenir compte de l'allongement du signal d'écho dans le circuit d'égalisation 8a.

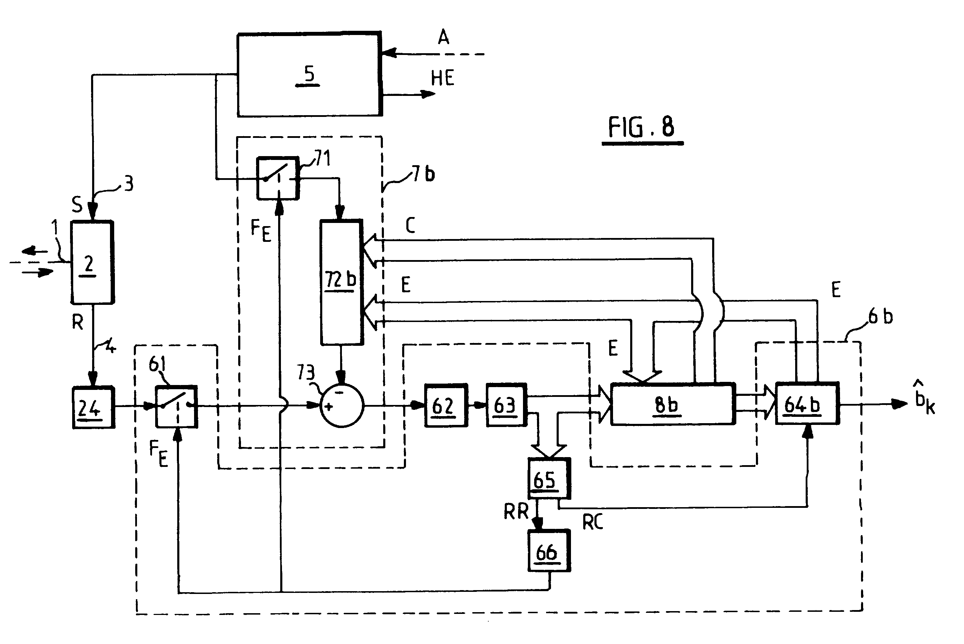

La structure présentée sur la figure 8 ne souffre pas de cet inconvénient, car le circuit d'égalisation y est placé en aval de l'annuleur d'écho.

La structure de la figure 8 est obtenue à partir de la structure de la figure 1, en insérant, après le convertisseur analogique-numérique 63, un circuit d'égalisation 8b. La sortie du circuit d'égalisation 8b est reliée à l'entrée du circuit 64 d'égalisation et de décision, le bloc 64b de la figure 8 étant identique au bloc 64a représenté sur la figure 5. Le signal d'erreur E est appliqué à l'entrée de commande du circuit d'égalisation 8b et à l'entrée de commande de l'annuleur d'écho 7b. Dans ce cas, il est nécessaire de tenir compte, dans l'annuleur d'écho 7b, du fait que le signal d'erreur E est pris non pas directement en sortie de l'annulation d'écho, mais après passage dans le circuit d'égalisation 8b.

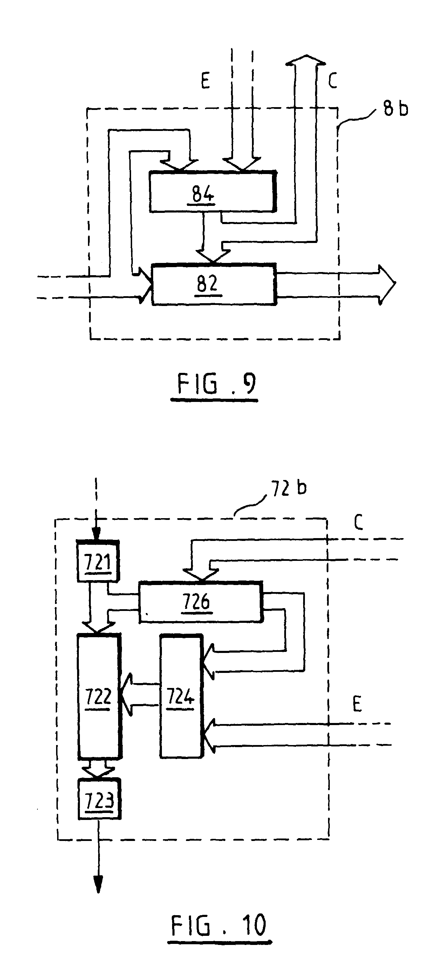

Ceci est fait comme indiqué sur les figures 9 et 10. Sur la figure 9, la structure du circuit d'égalisation 8b est reprise. Elle est identique à celle du circuit d'égalisation 8a, mais il a été prévu une sortie auxiliaire délivrant le signal numérique C de commande des coefficients du filtre numérique 82.

La figure 10 représente le circuit 72b de filtrage adaptatif utilisé dans l'annuleur d'écho 7b. Il est identique au circuit 72 de filtrage adaptatif de la figure 3, à ceci près qu'il ne comporte pas le convertisseur analogique-numérique 725, et qu'il comporte par contre un filtre 726, destiné à faire subir, au signal d'entrée du filtre numérique 722, avant application au circuit de commande 724, un filtrage auxiliaire en permanence identique à celui du filtre numérique 82 d'égalisation. A cet effet, le filtre numérique 726 est identique au filtre 82, et ses coefficients sont commandés par le signal numérique C.

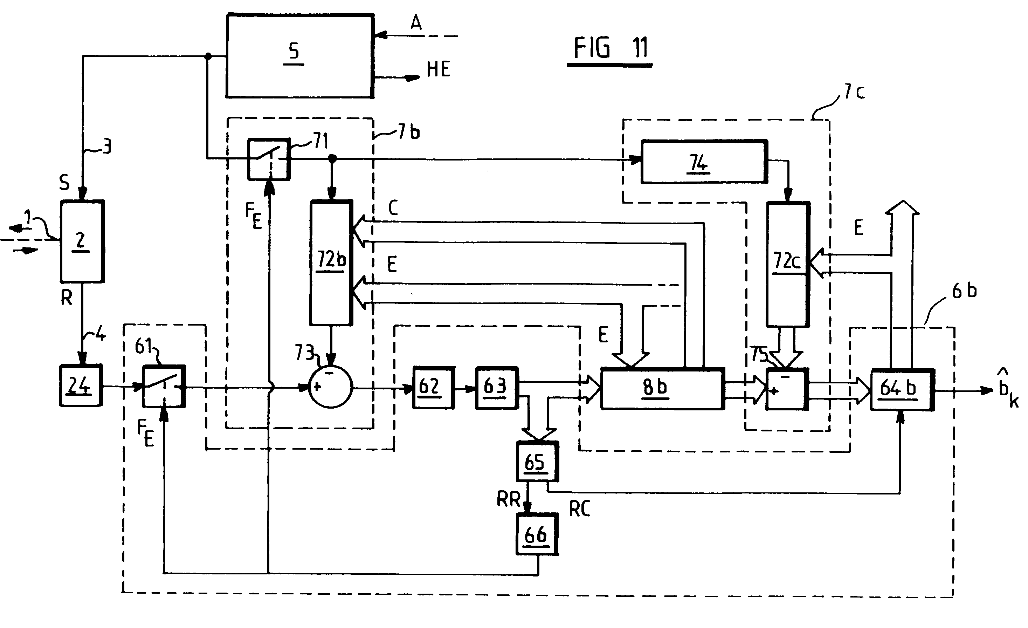

La figure 11 représente une variante de la structure de la figure 8, comprenant un annuleur d'écho 7c supplémentaire, et destiné à annuler un écho lointain sans interférence temporelle avec l'écho annulé par l'annuleur d'écho 7b. L'annuleur d'écho 7c est inséré en aval du circuit d'égalisation 8b et il comprend un circuit de retard 74, ici analogique, auquel sont appliqués les échantillons en sortie de l'échantillonneur 71, suivi d'un circuit de filtrage adaptatif 72c, au circuit 72a de la figure 7, commandé par le signal d'erreur E, et d'un circuit 75 de soustraction numérique, pour retrancher les échantillons du signal d'écho lointain estimé. Le circuit de retard 74 permet de retarder les échantillons du signal émis pour que ceux-ci arrivent à l'entrée du circuit de filtrage 72c sensiblement en même temps que les échantillons du signal d'écho lointain à l'entrée du circuit 75 de soustraction numérique.

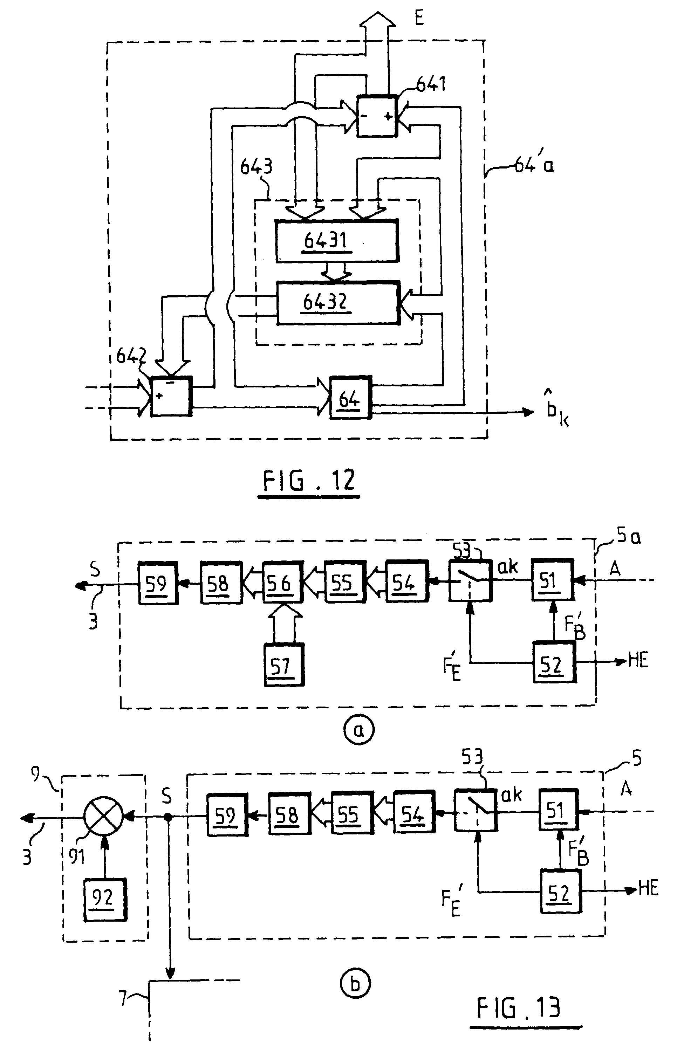

En référence maintenant à la figure 12, une variante 64'a du circuit 64'a de la figure 5 est décrite, qui correspond au cas où l'on ajoute un complément d'égalisation récursive. Sur la figure 12, un circuit 642 de soustraction numérique permet de retrancher, du signal à l'entrée du circuit 64'a, le signal de sortie d'un circuit de filtrage adaptatif 643, qui filtre le signal de sortie du circuit 64 de comparaison et de décision, de façon à annuler la fonction de corrélation entre le signal d'erreur E et le signal de sortie du circuit 64 de comparaison et de décision. De façon connue, le circuit de filtrage 643 comprend un filtre numérique 6432, commandé par un circuit de commande 6431, agencé pour appliquer l'algorithme du gradient.

Dans la description qui vient d'être faite, on a supposé, dans un souci de simplification, que le signal émis, comme le signal reçu, était en bande de base. Naturellement, il est à la portée d'un homme de métier d'adapter le terminal de l'invention pour qu'il fonctionne en bande passante, en ajoutant à l'émission, le modulateur nécessaire, et, à la réception, le démodulateur éventuellement nécessaire. De même, il est à la portée de l'homme de métier de mettre en oeuvre le terminal de l'invention dans le cas où, les signaux modulant des porteuses en quadrature, ceux-ci sont traités sous forme complexe.

La figure 13(a) représente, par exemple, une variante 5a du circuit d'émission 5, comprenant, entre le filtre 55 et le convertisseur numérique-analogique 58, un modulateur numérique 56 pour moduler une porteuse engendrée par un générateur de porteuse numérique 57. La figure 13(b) représente le cas où le circuit d'émission 5 est conservé tel quel, la modulation étant réalisée dans un modulateur analogique 9 comprenant ici un multiplieur analogique 91 et un générateur de porteuse analogique 92. Dans un tel cas on peut continuer à prélever le signal d'entrée de l'annuleur d'écho immédiatement en amont du coupleur hybride 2 ou, au contraire, et comme le montre la bure 13(b) entre le circuit d'émission 5 et le circuit de modulation 9, en introduisant,naturellement, une modulation dans l'annuleur d'écho.

## Revendications

1. Terminal de transmission de données sur une voie analogique bidirectionnelle (1), simultanément dans les deux sens, comprenant :

   - un coupleur hybride (2), raccordé à la voie bidirectionnelle (1) et à deux voies analogiques unidirectionnelles, une d'émission (3) et l'autre de réception (4),

- des moyens (5), reliés à la voie d'émission (3), pour engendrer, à partir de données locales (A) à émettre vers un autre terminal, au moins un signal analogique (S),
- des moyens (6; 6a; 6b), reliés à la voie de réception (4), pour estimer, à partir d'un signal reçu, analogique (R), des données numériques lointaines, en provenance de l'autre terminal, codées à l'aide de symboles, avec une rapidité de modulation ($F_B$) exprimée en bauds, non synchrone des moyens (5) de génération du signal émis, et,
- au moins un annuleur d'écho (7; 7a; 7b; 7b, 7c) disposé entre les moyens (5) de génération du signal émis, et les moyens (6; 6a; 6b) d'estimation des données lointaines, agencé pour estimer le signal d'écho, et retrancher, du signal reçu, un signal d'écho estimé,
- les moyens (6; 6a; 6b) d'estimation des données lointaines comprenant des premiers moyens d'échantillonnage (61), dudit signal reçu (R), des moyens de traitement (62-65) des échantillons dudit signal reçu (R), qui sont agencés pour restituer des symboles lointains estimés ($\hat{b}_k$) et un signal de rythme (RR) dont la fréquence est égale à ladite rapidité de modulation ($F_B$), et des moyens (66), syncrhonisés par ledit signal de rythme (RR) pour commander la fréquence d'échantillonnage ($F_E$) desdits premiers moyens d'échantillonnage (61),

caractérisé par le fait que:

- l'annuleur d'écho (7; 7a; 7b; 7b, 7c) comprend des deuxièmes moyens d'échantillonnage (71), dudit signal émis (S), reliés auxdits moyens de commande (66) et commandés ? la même fréquence ($F_E$) que lesdits premiers moyens d'échantillonnage (61), des premiers moyens de filtrage (72; 72a; 72b; 72b, 72c), pour filtrer les échantillons dudit signal émis (S) et délivrer des échantillons du signal d'écho estimé, et des premiers moyens de soustraction (73; 73a; 73; 73, 75) disposés après lesdits premiers moyens d'échantillonnage (61) pour retrancher les échantillons du signal d'écho estimé des échantillons dudit signal reçu (R).

2. Terminal selon la revendication 1, dans lequel lesdits moyens de commande (66) de la fréquence d'échantillonnage ($F_E$) sont agencés pour que celle-ci soit un multiple de ladite rapidité de modulation ($F_B$).

3. Terminal selon l'une des revendications 1 ou 2, dans lequel, les symboles de codage des données numériques lointaines pouvant prendre n états distincts de valeurs connues, les moyens de traitement (62-65) comprennent un circuit à contrôle automatique de gain (62), suivi d'un convertisseur analogique-numérique (63) délivrant des échantillons numériques, un circuit (64) de comparaison des valeurs desdits échantillons numériques aux n valeurs connues correspondant aux n états distincts, et de décision de la valeur à affecter à chaque symbole lointain estimé ($\hat{b}_k$), et un circuit (65) pour restituer, à partir desdits échantillons numériques, ledit signal de rythme (RR) et un signal (RC) de commande du rythme du circuit (64) de comparaison et de décision.

4. Terminal selon l'une des revendications 1 à 3, dans lequel les premiers moyens de filtrage (72) sont adaptatifs, pourvus d'une entrée, d'une sortie et d'une entrée de commande reliée à la sortie des premiers moyens de soustraction (73), et agencés pour annuler la fonction de corrélation entre les deux signaux appliqués respectivement à leur entrée et à leur entrée de commande.

5. Terminal selon la revendication 3, dans lequel :

- il est prévu, en outre, des deuxièmes moyens de soustraction (641) entre la sortie et l'entrée du circuit (64) de comparaison et de décision, pour délivrer un signal d'erreur (E),
- il est prévu, entre lesdits premiers moyens d'échantillonnage (61), et lesdits premiers moyens de soustraction (73a), des deuxièmes moyens de filtrage (8a), adaptatifs, pourvus d'une entrée, d'une sortie et d'une entrée de commande recevant le signal d'erreur (E), et agencés pour annuler la fonction de corrélation entre les deux signaux appliqués respectivement à leur entrée et à leur entrée de commande, et,
- les premiers moyens de filtrage (72a) sont adaptatifs pourvus d'une entrée, d'une sortie et d'une entrée de commande recevant le signal d'erreur (E), et agencés pour annuler la fonction de corrélation entre les deux signaux appliqués respectivement à leur entrée et à leur entrée de commande.

6. Terminal selon la revendication 3, dans lequel :

- il est prévu, en outre, des deuxièmes moyens de soustraction (641) entre la sortie et l'entrée du circuit (64) de comparaison et de décision, pour délivrer un signal d'erreur (E),
- il est prévu, entre lesdits premiers moyens de soustraction (73) et le circuit (64) de comparaison et de décision, des deuxièmes moyens de filtrage (8b), adaptatifs, pourvus d'une entrée, d'une sortie et d'une entrée de commande recevant le signal d'erreur E, et agencés pour annuler la fonction de corrélation entre les deux signaux appliqués respectivement à leur entrée et à leur entrée de commande, et,

- les premiers moyens de filtrage (72b) sont adaptatifs, pourvus d'une entrée, d'une sortie et d'une entrée de commande recevant le signal d'erreur (E), et agencés pour annuler la fonction de corrélation entre le signal d'erreur (E) et le signal appliqué à leur entrée, après un filtrage de ce signal d'entrée en permanence identique au filtrage entre l'entrée et la sortie des deuxièmes moyens de filttrage (8b).

7. Terminal selon la revendication 6, dans lequel :

- les deuxièmes moyens de filtrage (8b) comprennent un premier filtre numérique (82) et des moyens (84) pour commander, de façon adaptative, les coefficients de ce premier filtre numérique (82), en réponse au signal à l'entrée de celui-ci et au signal d'erreur (E), et,

- les premiers moyens de filtrage (72b) comprennent un deuxième filtre numérique (722) et des moyens (724) pour commander, de façon adaptative, les coefficients de ce deuxième filtre numérique (722) en réponse au signal d'erreur (E) et au signal de sortie d'un troisième filtre numérique (726), dont l'entrée est reliée à l'entrée du deuxième filtre numérique (722), et dont les coefficients sont en permanence commandés pour être identiques à ceux dudit premier filtre numérique (82) des deuxièmes moyens de filtrage (8b).

8. Terminal selon l'une des revendications 6 ou 7, dans dans lequel il est en outre prévu un annuleur d'écho (7c) pour écho lointain, comprenant, à la sortie desdits deuxièmes moyens d'échantillonnage (71), un circuit retardateur (74), suivi de troisièmes moyens de filtrage (72c), pour filtrer les échantillons du signal émis retardé et délivrer des échantillons du signal d'écho lointain estimé, et des troisièmes moyens de soustraction (75), disposés après les deuxièmes moyens de filtrage (8b) pour retrancher les échantillons du signal d'écho lointain estimé des échantillons en sortie des deuxièmes moyens de filtrage (8b).

9. Terminal selon la revendication 8, dans lequel les troisièmes moyens de filtrage (72c) sont adaptatifs, pourvus d'une entrée, d'une sortie, et d'une entrée de commande recevant le signal d'erreur (E), et agencés pour annuler la fonction de corrélation entre les deux signaux appliqués respectivement à leur entrée et à leur entrée de commande.

10. Terminal selon l'une des revendications 4 à 9, dans lequel lesdits premiers moyens de filtrage (72; 72a; 72b; 72b, 72c) comprennent :

- un convertisseur analogique-numérique (721) suivi d'un filtre numérique (722), et,

- des moyens (724, 725; 724; 724, 726; 724, 726) pour commander, de façon adaptative, les coefficients du filtre numérique (722), en réponse au signal à l'entrée du filtre numérique (722) et au signal appliqué à l'entrée de commande.

11. Terminal selon l'une des revendications 5 à 10, dans lequel il est prévu, en outre, des quatrièmes moyens de soustraction (642), disposés à l'entrée du circuit (64) de comparaison et de décision, et connectés à la sortie de quatrièmes moyens de filtrage (643), pour délivrer au circuit (64) de comparaison et de décision des échantillons numériques dont ont été retranchés les échantillons en sortie des quatrièmes moyens de filtrage (643), ceux-ci étant adaptatifs, pourvus d'une entrée reliée à la sortie du circuit (64) de comparaison et de décision, et d'une entrée de commande recevant le signal d'erreur (E), et agencés pour annuler la fonction de corrélation entre les deux signaux appliqués respectivement à leur entrée et à leur entrée de commande.

12. Terminal selon l'une des revendications 1 à 11, dans lequel les moyens (5; 2a) de génération dudit signal émis (S) sont reliés directement à l'entrée de l'annuleur d'écho (7; 7a; 7b; 7b, 7c) et à la voie d'émission (3) du coupleur hybride (2).

13. Terminal selon l'une des revendications 1 à 11, dans lequel, le signal émis analogique étant en bande de base, les moyens (5) de génération dudit signal émis (S) sont reliés directement à l'entrée de l'annuleur d'écho (7; 7a; 7b; 7b, 7c) et par l'intermédiaire d'un modulateur analogique (9), à la voie d'émission (3) du coupleur hybride (2).

**Patentansprüche**

1. Terminal zur Übertragung von Daten auf einem analogen bidirektionellen Weg (1), gleichzeitig in beiden Richtungen, umfassend:

- einen Hybridkoppler (2), der an den bidirektionellen Weg (1) angeschlossen ist sowie an zwei analoge, unidirektionelle Wege, einer zur Sendung (3) und der andere zum Empfang (4),

- Mittel (5), die an den Sendeweg (3) angeschlossen sind, um ausgehend von lokalen Daten (A), die an ein anderes Terminal zu senden sind, zumindest ein analoges Signal (S) zu erzeugen,

- Mittel (6; 6a; 6b), die an den Empfangsweg (4) angeschlossen sind, um ausgehend von einem empfangenen analogen Signal (R) entfernte digitale Daten, die von dem anderen Terminal stammen und mit Hilfe von Symbolen mit einer Modulationsgeschwindigkeit ($F_B$) codiert sind, die in Baud ausgedrückt ist und nicht synchron mit den Mitteln (5) zur Erzeugung des ausgesendeten Signals ist, zu schätzen, und

- zumindest eine Einrichtung zum Beseitigen eines Echos (7; 7a; 7b; 7b, 7c), die zwischen den Mitteln (5) zur Erzeugung des ausgesendeten Signals und den Mitteln (6; 6a; 6b) zum Schätzen der entfernten Daten angeordnet und dafür eingerichtet ist, das Echosignal zu schätzen und von dem empfangenen Signal ein geschätztes Echosignal abzuziehen,

- wobei die Mittel (6; 6a; 6b) zum Schätzen der entfernten Daten eine erste Einrichtung zur Abtastung (61) des empfangenen Signals (R), eine Verarbeitungseinrichtung (62-65) der Abtastwerte des empfangenen Signals (R), die dazu eingerichtet ist, entfernte geschätzte Symbole ($b_k$) und ein Rhythmussignal (RR) zu rekonstruieren, dessen Frequenz gleich der genannten Modulationsgeschwindigkeit ($F_B$) ist, sowie Mittel (66), die durch das genannte Rhythmussignal (RR) synchronisiert sind, um die Abtastfrequenz ($F_B$) der ersten Einrichtung zur Abtastung (61) zu steuem, aufweisen, dadurch gekennzeichnet, daß

- die Einrichtung zum Beseitigen eines Echos (7; 7a; 7b; 7b, 7c) eine zweite Einrichtung zur Abtastung (71) des ausgesendeten Signals (S) aufweist, die mit den Mitteln zur Steuerung (66) verbunden ist und mit der gleichen Frequenz ($F_E$) wie die erste Einrichtung zur Abtastung (61) gesteuert ist, eine erste Filtereinrichtung (72; 72a; 72b; 72b, 72c), um die Abtastwerte des ausgesendeten Signals (S) zu filtern und die Abtastwerte des geschätzten Echosignals abzugeben, und eine erste Subtraktionseinrichtung (73; 73a; 73; 73, 75), die nach der ersten Einrichtung zur Abtastung (61) angeordnet ist, um die Abtastwerte des geschätzten Echosignals von den Abtastwerten des empfangenen Signals (R) abzuziehen.

2. Terminal nach Anspruch 1, dadurch gekennzeichnet, daß die genannten Mittel zur Steuerung (66) der Abtastfrequenz ($F_E$) so eingerichtet sind, daß diese ein Vielfaches der genannten Modulationsgeschwindigkeit ($F_B$) ist.

3. Terminal nach Anspruch. 1 oder 2, dadurch gekennzeichnet, daß die Symbole zur Codierung der entfernten numerischen Daten n unterschiedliche bekannte Wertzustände annehmen können, wobei die Verarbeitungseinrichtung (62-65) einen Schaltkreis mit automatischen Verstärkungssteuerung (62) umfaßt, auf den ein Analog/Digital-Wandler (63) folgt, der digitale Abtastwerte abgibt, eine Schaltung (64) zum Vergleich der genannten digitalen Abtastwerte mit den n bekannten Werten, die den n unterschiedlichen Zuständen entsprechen, und zur Entscheidung über den mit jedem entfernten, geschätzten Symbol ($b_k$) zu beeinflussenden Wert, sowie eine Schaltung (65), um ausgehend von den digitalen Abtastwerten das Rhythmussignal (RR) und ein Signal (RC) zur Steuerung des Rhythmus der Vergleichs und Entscheidungsschaltuug (64) zu rekonstruieren.

4. Terminal nach einem der Ansprüche 1 bis 3, dadurch gekennzeichnet, daß die erste Filtereinrichtung (72) anpassungsfähig ist und mit einem Eingang, einem Ausgang und einem Steuerungseingang, der an den Ausgang der ersten Subtraktionseinrichtung (73) angeschlossen ist, versehen ist, und dafür eingerichtet ist, die Korrelationsfunktion zwischen den beiden Signalen, die an deren Eingang und deren Steuerungseingang anliegen, zu beseitigen.

5. Terminal nach Anspruch 3, dadurch gekennzeichnet, daß:

- weiterhin eine zweite Subtraktionseinrichtung (641) zwischen dem Ausgang und dem Eingang der Vergleichs- und Entscheidungsschaltung (64) vorgesehen ist, um ein Fehlersignal (E) abzugeben,

- zwischen der ersten Abtasteinrichtung (61) und der ersten Subtraktionseinrichtung (73a) eine zweite Filtereinrichtung (8a) angeordnet ist, die anpassungsfähig ist und mit einem Eingang, einem Ausgang und einem Steuerungseingang, der das Fehlersignal (E) erhält, versehen ist, und dafür ein.gerichtet ist, um die Korrelationsfunktion zwischen den beiden Signalen, die an deren Eingang und an deren Steuerungseingang *anliegen,* zu beseitigen, und

- die erste Filtereinrichtung (72a) anpassungsfähig ist und mit einem Eingang, einem Ausgang und einem Steuerungseingang, der das Fehlersignal (E) erhält, versehen ist, und dafür eingerichtet ist, die Korrelationsfunktion zwischen den beiden Signalen, die an deren Eingang und an deren Steuerungseingang anliegen, zu beseitigen.

6. Terminal nach Anspruch 3, dadurch gekennzeichnet, daß:

- weiterhin eine zweite Subtraktionseinrichtung (641) zwischen dem Ausgang und dem Eingang der Vergleichs- und Entscheidungsschaltung (64) vorgesehen ist, um ein Fehlersignal (E) abzugeben,

- zwischen der ersten Subtraktionseinrichtung (61) und der Vergleichs- und Entscheidungsschaltung (64) eine zweite Filtereinrichtung (8b) angeordnet ist, die anpassungsfähig ist und mit einem Eingang, einem Ausgang und *einem* Steuerungseingang, der das Fehlersignal (E) erhält, versehen ist, und dafür eingerichtet ist, um die Korrelationsfunktion zwischen den beiden signalen, die an deren Eingang und an deren Steuerungseingang anliegen, zu beseitigen, und

- die erste Filtereinrichtung (72a) anpassungsfähig ist und mit einem Eingang, einem Ausgang und einem Steuerungseingang, der das Fehlersignal (E) erhält, versehen ist, und dafür eingerichtet ist, die Korrelationsfunktion zwischen den beiden Signalen, die an deren Eingang und an deren Steuerungseingang anliegen, zu beseitigen, nach einer ständigen Filterung dieses Eingangssignals, identisch der Filterung zwischen dem Eingang und dem Ausgang der zweiten Filtereinrichtung (8b).

7. Terminal nach Anspruch 6, dadurch gekennzeichnet, daß:

- die zweite Filtereinrichtung (8b) ein erstes digitales Filter (82) und eine Einrichtung (84) zum Steuern, in adaptiver Weise, der Koeffizienten dieses ersten digitalen Filters (82), ansprechend auf das Signal an dessen Eingang und auf das Fehlersignal (E), aufweist, und

- die erste Filtereinrichtung (72b) ein zweites digitales Filter (722) und eine Einrichtung (724) zum Steuern, in adaptiver Weise, der Koeffizienten dieses zweiten digitalen Filters (722), ansprechend auf das Fehlersignal (E) und das Ausgangssignal eines dritten digitalen Filters (726) aufweist, dessen Eingang mit dem Eingang des zweiten digitalen Filters (722) verbunden ist, und dessen Koeffizienten ständig gesteuert werden, damit sie mit denen des ersten digitalen Filtcrs (82) der zweiten Filtereinrichtung (8b) identisch sind.

8. Terminal nach einem der Ansprüche 6 oder 7, dadurch gekennzeichnet, daß weiterhin eine Einrichtung zum Beseitigen eines Echos (7c) für ein entferntes Echo vorhanden ist, die am Ausgang der zweiten Abtasteinrichtung (71) eine Verzögerungsschaltung (74) aufweist, auf die eine dritte Filtereinrichtung (72c) folgt, um die Abtastwerte des verzögerten ausgesendeten Signals zu filtern und Abtastwerte des entfernten geschätzten Echosignals abzugeben, sowie eine dritte Subtraktionseinrichtung (75), die nach der zweiten Filtereinrichtung (8b) angeordnet ist, um die Abtastwerte des entfernten geschätzten Echosignals von den Abtastwerten am Ausgang der zweiten Filtereinrichtung (8b) abzuziehen.

9. Terminal nach Anspruch 8, dadurch gekennzeichnet, daß die dritte Filtereinrichtung (72c) anpassungsfähig ist, mit einem Eingang, einem Ausgang und einem Steuerungseingang, der das Fehlersignal (E) erhält, versehen ist, und dafür eingerichtet ist, um die Korrelationsfunktion zwischen den beiden Signalen, die an deren Eingang und an deren Steuerungseingang anliegen, zu beseitigen.

10. Terminal nach einem der Ansprüche 4 bis 9, dadurch gekennzeichnet, daß die erste Filtereinrichtung (72; 72a; 72b, 72b, 72c) umfaßt:

- einen Analog/Digital-Wandler (721), auf den ein digitales Filter (722) folgt, und

- Mittel (724, 725; 724; 724, 726; 724, 726) zum Steuem, in adaptiver Weise, der Koeffizienten des digitalen Filters (722), ansprechend auf das Signal am Eingang des digitalen Filters (722) und auf das Signal, das am Steuerungseingang anliegt.

11. Terminal nach einem der Ansprüche 5 bis 10, dadurch gekennzeichnet, daß weiterhin eine vierte Subtraktionseinrichtung (642) vorgesehen ist, die am Eingang der Vergleichs- und Entscheidungsschaltung (64) angeordnet ist, und an den Ausgang der vierten Filtereinrichtung (643) angeschlossen ist, *um* an die Vergleichs- und Entscheidungsschaltung (64) digitale Abtastwerte abzugeben, von denen die Abtastwerte am Ausgang der vierten Filtereinrichtung (643) abgezogen worden sind, wobei diese anpassungsfähig ist und mit *einem* Eingang, der an den Ausgang der Vergleichs- und Entscheiduugsschaltung (64) angeschlossen ist, und mit einem Steuerungseingang, der das Fehlersignal (E) erhält, versehen ist, und dafür eingerichtet ist, die Korrelationsfunktion zwischen den beiden Signalen, die an deren Eingang und an deren Steuerungseingang anliegen, zu beseitigen.

12. Terminal nach einem der Ansprüche 1 bis 11, dadurch gekennzeichnet, daß die Einrichtung (5; 2a) zur Erzeugung des ausgesendeten Signals (S) unmittelbar an den Eingang der Einrichtung zum Beseitigen eines Echos (7; 7a; 7b; 7b, 7c) und an den Sendeweg (3) des Hybridkopplers (2) angeschlossen ist.

13. Terminal nach einem der Ansprüche 1 bis 11, dadurch gekennzeichnet, daß die Einrichtung (5) zur Erzeugung des ausgesendeten Signals (S), wobei das gesendete analoge Signal im Modulationsfrequenzband liegt, unmittelbar mit dem Eingang der Einrichtung zum Beseitigen eines Echos (7; 7a; 7b; 7b, 7c) und unter Zwischenschaltung eines analogen Modulators (9) an den Sendeweg (3) des Hybridkopplers (2) angeschlossen ist.

**Claims**

1. Terminal for the transmission of data on a bidirectional analog channel (1) simultaneously in the two directions, comprising:

   - a hybrid coupler (2) connected to the bidirectional channel (1) and to two unidirectional analog channels: one for transmission (3) and the other for reception (4);
   - means (5) connected to the transmission channel (3) for generating at least one analog signal (S) from local data (A) to be transmitted to another terminal;
   - means (6; 6a; 6b) connected to the reception channel (4) for evaluating on the basis of a received analog signal (R) remote numerical data originating from another terminal, which have been encoded using symbols, with a speed of modulation ($F_B$), expressed in bauds, which is not synchronous with the means (5) for generating the transmitted signal, and
   - at least one echo canceller (7; 7a; 7b; 7b, 7c), which is disposed between the means (S) for generating the transmitted signal and the means (6; 6a; 6b) for evaluating the remote data and is designed to evaluate the echo signal and to subtract an evaluated echo signal from the received signal;
   - means (6; 6a; 6b) for evaluating the remote data comprising first means (61) for sampling said received signal (R), means (62-65) for processing the samples of said received signal (R), which are designed to restore the evaluated remote symbols ($b_k$) and a clock pulse (RR), the frequency of which is equal to said speed of modulation ($F_B$), and means (66) synchronised by said clock pulse (RR) to control the sampling frequency ($F_E$) of said first sampling means (61),

characterised in that
the echo canceller (7; 7a; 7b; 7b, 7c) comprises second sampling means (71) of said transmitted signal (S), which are connected to said control means (66) and are controlled at the same frequency ($F_E$) as said first sampling means (61), first filtering means (72; 72a; 72b; 72b, 72c) for filtering the samples of said transmitted signal (S) and for delivering samples of the evaluated echo signal, and first subtraction means (73; 73a; 73; 73, 75) disposed downline of said first sampling means (61) to subtract samples of the evaluated echo signal from samples of said received signal (R).

2. Terminal according -to Claim 1, wherein said control means (66) for the sampling frequency ($F_E$) are designed so that this is a multiple of said speed of modulation ($F_B$).

3. Terminal according to one of Claims 1 or 2, wherein, in the case where the coding symbols of the remote numerical data can assume n distinct states of known values, the processing means (62-65) comprise an automatic gain control circuit (62) followed by an analog-digital converter (63) delivering the digital samples, a circuit (64) for comparing the values of said digital samples to n known values corresponding to n distinct states, and for deciding the value to be allocated to each evaluated remote symbol ($b_k$), and a circuit (65) to restore on the basis of said digital samples said clock pulse (RR) and a control signal (RC) for the cycle of the comparison and decision circuit (64).

4. Terminal according to one of Claims 1 to 3, wherein the first filtering means (72) are adaptive, are provided with an input, an output and a control input connected to the output of the first subtraction means (73), and are designed to cancel the function of correlation between the two signals respectively applied to their input and their control input.

5. Terminal according to Claim 3, wherein:

   - second subtraction means (641) are additionally provided between the output and the input of the comparison and decision circuit (64) to deliver an error signal (E);
   - between said first sampling means (61) and said first subtraction means (73a), second adaptive filtering means (8a) are provided which are provided with an input, an output and a control input receiving the error signal (E), and are designed to cancel the function of correlation between the two signals respectively applied to their input and their control input, and

- the first filtering means (72a) are adaptive, are provided with an input, an output and a control input receiving the error signal (E), and are designed to cancel the function of correlation between the two signals respectively applied to their input and their control input.

6. Terminal according to Claim 3, wherein:

- second subtraction means (641) are additionally provided between the output and the input of the comparison and decision circuit (64) to deliver an error signal (E);
- between said first subtraction means (73) and the comparison and decision circuit (64), second adaptive filtering means (8b) are provided which are provided with an input, an output and a control input receiving the error signal E, and are designed to cancel the function of correlation between the two signals respectively applied to their input and their control input, and
- the first filtering means (72b) are adaptive, are provided with an input, an output and a control input receiving the error signal (E), and are designed to cancel the function of correlation between the error signal (E) and the signal applied to their input after continuous filtering of this input signal which is identical to the filtering between the input and the output of the second filtering means (8b).

7. Terminal according to Claim 6, wherein:

- the second filtering means (8b) comprise a first digital filter (82) and means (84) for controlling the coefficients of this first digital filter (82) in an adaptive manner in response to the signal at the input thereof and to the error signal (E), and
- the first filtering means (72b) comprise a second digital filter (722) and means (724) for controlling the coefficients of this second digital filter (722) in an adaptive manner in response to the error signal (E) and to the output signal of a third digital filter (726), the input of which is connected to the input of the second digital filter (722), and the coefficients of which are continuously controlled in order to be identical to those of said first digital filter (82) of the second filtering means (8b).

8. Terminal according to one of Claims 6 or 7, wherein an echo canceller (7c) is additionally provided for a remote echo, comprising at the output of said second sampling means (71) a delay circuit (74) followed by third sampling means (72c) to filter the samples of the delayed transmitted signal and deliver samples of the evaluated remote echo signal, and third subtraction means (75) disposed downline of the second filtering means (8b) to separate the samples of the evaluated remote echo signal from samples exiting from the second filtering means (8b).

9. Terminal according to Claim 8, wherein the third filtering means (72c) are adaptive, are provided with an input, an output and a control input receiving the error signal (E), and are designed to cancel the function of correlation between the two signals respectively applied to their input and their control input.

10. Terminal according to one of Claims 4 to 9, wherein said first filtering means (72; 72a; 72b; 72b, 72c) comprise:

- an analog-digital converter (721) followed by a digital filter (722), and
- means (724, 725; 724; 724, 726; 724, 726) for controlling the coefficients of the digital filter (722) in an adaptive manner in response to the signal at the input of the digital filter (722) and to the signal applied to the control input.

11. Terminal according to one of Claims 5 to 10, wherein fourth subtraction means (642) are additionally provided which are disposed at the input of the comparison and decision circuit (64) and connected to the output of the fourth filtering means (643) to deliver to the comparison and decision circuit (64) digital samples, from which samples existing from the fourth filtering means (643) have been digital said fourth filtering means being adaptive, provided with an input connected to the output of the comparison and decision circuit (64) and with a control input receiving the error signal (E), and designed to cancel the function of correlation between the two signals respectively applied to their input and their control input.

12. Terminal according to one of Claims 1 to 11, wherein the means (5; 2a) for generating said transmitted signal (S) are directly connected to the input of the echo canceller (7; 7a; 7b; 7b, 7c) and to the transmission channel (3) of the hybrid coupler (2).

13. Terminal according to one of Claims l to 11, wherein, in the case where the emitted analog signal is in base band, the means (5) for generating said transmitted signal (S) are directly connected to the input of the echo canceller (7; 7a; 7b; 7b, 7c) and are connected to the transmission channel (3) of the hybrid coupler (2) via an analog modulator (9).

FIG. 1

FIG. 2

FIG. 3

FIG. 4

FIG. 5

FIG. 6

FIG. 7

FIG. 8

EP 0 275 790 B1

FIG . 9

FIG . 10

FIG 11

EP 0 275 790 B1

FIG . 12

ⓐ

ⓑ

FIG . 13